# EUROPEAN PATENT APPLICATION

(11) **EP 4 542 348 A1**
(43) Date of publication of application: **23.04.2025**
(21) Application number: 23870857.2
(22) Date of filing: 26.09.2023
(51) Int. Cl.: G06F 3/023

(54) **INPUT METHOD, ELECTRONIC DEVICE AND STORAGE MEDIUM**

(30) Priority: 30.09.2022 CN 202211210582
(71) Applicant: Huawei Technologies Co., Ltd., Shenzhen, Guangdong 518129 (CN)
(72) Inventor: WANG, Yincheng, Shenzhen, Guangdong 518129 (CN); LI, Lingfei, Shenzhen, Guangdong 518129 (CN)
(74) Representative: Goddar, Heinz J.
(86) International application number: PCT/CN2023/121710
(87) International publication number: WO 2024/067630

(57) **Abstract**

This application is applied to the field of input method application technologies, and provides an input method, an electronic device, and a storage medium. The input method includes: detecting a pre-modification operation performed by a user on M target words, where the pre-modification operation includes entering first input information, the first input information corresponds to at least N words, N is greater than M, and both N and M are positive integers; and displaying a first-page candidate term set in an interface of the input method application in response to the pre-modification operation, where the first-page candidate term set includes at least one original candidate term corresponding to the first input information and at least one sub-candidate term corresponding to some of the first input information. The original candidate term includes at least N words, and the sub-candidate term includes M words. The foregoing input method can help a user quickly and correctly modify an incorrect word in entered words, thereby reducing user modification time and improving user modification efficiency.

## Description

This application claims priority to Chinese Patent Application No. 202211210582.7, filed with the China National Intellectual Property Administration on September 30, 2022 and entitled "INPUT METHOD, ELECTRONIC DEVICE, AND STORAGE MEDIUM", which is incorporated herein by reference in its entirety.

### TECHNICAL FIELD

This application relates to the field of input method application technologies, and in particular, to an input method, an electronic device, and a storage medium.

### BACKGROUND

In recent years, with development of science and technology, an input method application is increasingly used in a smart electronic device (such as a mobile phone, a tablet computer, a notebook computer, or a smart television). In an entering process by using the input method application, a user often encounters a case in which an incorrect word in entered words needs to be modified.

For example, if the user enters pinyin, strokes, or the like corresponding to a plurality of words at a time, for example, the user enters pinyin "woheyanxiyuanyiqiquchifanle", automatically matched information of the input method application is "wǒhéyánxi̅yuányi̅qǐqùchi̅fànle" (I had a meal with Yan Xiyuan). In the automatically matched information, "xi̅" (sunlight) is not a word that the user wants to enter, and the word that the user wants to enter is "xi̅" (stream). The user may first select the automatically matched information, and then modify the incorrect word "xi̅" (sunlight). In a modification process, if the user directly enters pinyin "xi", a first-page candidate term set of the input method application may not include the word "xi̅" (stream), but includes only other words corresponding to the pinyin "xi". Therefore, to quickly modify "xi̅" (sunlight) to "xi̅" (stream), the user usually enters, based on experience of using the input method application, a term including the word "xi̅" (stream), for example, pinyin "xiliu" of a common term "xi̅liú" (stream flow). Then, the user may choose to replace the word "xi̅" (sunlight) with words "xi̅liú" (stream flow), and then delete an irrelevant word "liú" (flow) in the words "xi̅liú" (stream flow), to complete word modification.

If a quantity of words entered by the user is large, a probability of occurrence of an incorrect word correspondingly increases, and the user needs to correct the incorrect word in the entered words one by one, leading to a large modification workload.

### SUMMARY

This application provides an input method, an electronic device, and a storage medium, so that a first-page candidate term set can be set based on input information of a user, and the first-page candidate term set includes more candidate terms that are more likely to be correct words needed by the user. This can help the user quickly and correctly modify an incorrect word in entered words, thereby reducing user modification time and improving user modification efficiency.

According to a first aspect, an input method is provided, including: detecting a pre-modification operation performed by a user on M target words, where the pre-modification operation includes entering first input information, the first input information corresponds to at least N words, N is greater than M, and both N and M are positive integers; and displaying a first-page candidate term set in an interface of the input method application in response to the pre-modification operation, where the first-page candidate term set includes at least one original candidate term corresponding to the first input information and at least one sub-candidate term corresponding to some of the first input information. The original candidate term includes at least N words, and the sub-candidate term includes M words.

In the foregoing solution, after the input information of the user is detected, the original candidate term corresponding to the input information and the sub-candidate term that corresponds to at least some of the input information and that has a same quantity of words as the M target words are displayed in the first-page candidate term based on the input information, so that the first-page candidate term set includes the original candidate term and the sub-candidate term that are more likely to be correct words needed by the user. In this way, the user can quickly and correctly select a needed candidate term to complete a modification operation.

In some embodiments, the first-page candidate term set is a candidate term set that can be displayed without a need for the user to perform a page scrolling operation after entering code. The page scrolling operation usually indicates that after the page flipping operation is performed, none or some of originally displayed first-page candidate terms are displayed, and other candidate terms are displayed instead. In some embodiments, a quantity of candidate terms in the first-page candidate term set may be customized by the user.

With reference to the first aspect, in some implementations, the M target words are M selected words, or the M target words are M words deleted before the pre-modification operation.

In the foregoing solution, the user may identify, through a plurality of operations, a word that needs to be modified, namely, the incorrect word, including selecting, with a cursor, the word that needs to be modified or deleting the word that needs to be modified first. Some of the first input information entered by the user corresponds to the word that needs to be modified and that is identified by the user through the plurality of operations.

With reference to the first aspect, in some implementations, the displaying a first-page candidate term set in an interface of the input method application in response to the pre-modification operation includes: corresponding to a first case, displaying an original candidate term a₁ at a 1^{st} location in the first-page candidate term set. The first case includes: A weight value of the original candidate term a₁ that has a maximum weight value and that appears after the first input information is entered is less than a weight value of a sub-candidate term a₂ that is of the original candidate term a₁ and that appears after second input information corresponding to the M target words is entered.

In the foregoing solution, the weight value of the original candidate term a₁ that has a maximum weight value and that appears after the first input information is entered is compared with the weight value of the sub-candidate term a₂ that is of the original candidate term a₁ and that appears after second input information corresponding to the M target words is entered, to determine that a correct word needed by the user is more likely to be the original candidate term a₁, and the original candidate term a₁ is set at the 1^{st} location in the first-page candidate term set. This can help the user more likely to quickly select a correct candidate term in the first case.

It should be understood that a relative display order of a plurality of candidate terms is determined by weight values of the plurality of candidate terms. Usually, a higher probability of using a candidate term by the user indicates a larger weight value of the candidate term and a higher ranking. Each input method has an internal weight value calculation manner of the input method. For example, calculation is performed based on historical information such as a use frequency of the candidate term by using a specific algorithm. This is not limited in this application.

It should be understood that the 1^{st} location herein is a highest-priority location in a candidate term display order customized by the input method. A highest-priority is reflected in a fact that an entering process is simpler than other candidate terms. For example, the space key can be used for direct entering. For example, for the frequently-used Sogou input method, an identifier of the 1^{st} location is "1", and a candidate term whose identifier is "1" may be directly entered by using the space key, and another candidate term may need to be entered by entering a corresponding identifier. The "1^{st}" location is not limited to having an identifier, and is not limited to having the identifier "1". Similarly, if there is a candidate term that is most convenient to be entered in another input method, it may also be considered that the candidate term is at the 1^{st} location.

With reference to the first aspect, in some implementations, the sub-candidate term a₂, k₁ original candidate terms other than the original candidate term a₁, and/or k₂ sub-candidate terms are displayed at remaining locations in the first-page candidate term set. Weight values of the k₁ original candidate terms that appear corresponding to entering of the first input information are greater than a weight value of another original candidate term that appears, the k₂ sub-candidate terms correspond to at least some of the k₁ original candidate terms, k₁ is greater than or equal to k₂, k₁ and k₂ are natural numbers, and ranges of k₁ and k₂ are (0, k].

In the foregoing solution, the sub-candidate term a₂, the k₁ original candidate terms that have larger weight values other than the original candidate term a₁ and that correspond to the first input information, and the k₂ sub-candidate terms corresponding to the k₁ original candidate terms are displayed at other locations other than the 1^{st} location in the first-page candidate term set, so that the first-page candidate term set may include more candidate terms that are more likely to be words needed by the user. This further helps the user select a correct candidate term more quickly, to improve modification efficiency of the user.

With reference to the first aspect, in some implementations, the first case further includes: A difference between the weight value of the sub-candidate term a₂ and the weight value of the original candidate term a₁ is greater than a preset threshold.

In the foregoing solution, it is determined that the difference between the weight value of the original candidate term a₁ and the weight value of the sub-candidate term a₂ is greater than the preset threshold, so that it may be further determined that the correct word needed by the user is more likely to be the original candidate term a₁.

With reference to the first aspect, in some implementations, corresponding to a second case, a sub-candidate term a₂ at a 1^{st} location is displayed in the first-page candidate term set. The sub-candidate term a₂ corresponds to an original candidate term a₁ that has a maximum weight value and that appears after the first input information is entered.

In the foregoing solution, in the second case other than the first case, it may be determined that a correct word that is more likely to be needed by the user is the sub-candidate term a₂, and the correct word is displayed at the 1^{st} location in the first-page candidate term set. This can help the user more likely to quickly select a correct candidate term in the second case.

With reference to the first aspect, in some implementations, the original candidate term a₁, p₁ original candidate terms other than a₁, and/or p₂ sub-candidate terms are displayed at remaining locations in the first-page candidate term set. Weight values of the p₁ original candidate terms that appear corresponding to entering of the first input information are greater than a weight value of an appearing original candidate term other than a₁, the p₂ sub-candidate terms correspond to at least some of the p₁ original candidate terms, p₂ is greater than or equal to p₁, p₁ and p₂ are natural numbers, and ranges of p₁ and p₂ are (0, k].

In the foregoing solution, the original candidate term a₁, the p₁ original candidate terms that have larger weight values other than the original candidate term a₁ and that correspond to the first input information, and at least some sub-candidate terms corresponding to the p₁ original candidate terms are displayed at other locations other than the 1^{st} location in the first-page candidate term set, so that the first-page candidate term set may include more candidate terms that are more likely to be words needed by the user. This further helps the user select a correct candidate term more quickly, to improve modification efficiency of the user.

With reference to the first aspect, in some implementations, the second case includes: a weight value of the original candidate term a₁ that has the maximum weight value and that appears after the first input information is entered is less than a weight value of the sub-candidate term a₂ that is of the original candidate term a₁ and that appears after second input information corresponding to the M target words is entered, and a difference between the weight value of the sub-candidate term a₂ and the weight value of the original candidate term a₁ is less than or equal to a preset threshold; and the weight value of the original candidate term a₁ that has the maximum weight value and that appears after the first input information is entered is greater than or equal to the weight value of the sub-candidate term a₂ that is of the original candidate term a₁ and that appears after the second input information corresponding to the M target words is entered.

In the foregoing solution, it is determined that the weight value of the original candidate term a₁ is less than the weight value of the sub-candidate term a₂ and the difference between the two is less than or equal to the preset threshold, or it is determined that the weight value of the original candidate term a₁ is greater than or equal to the weight value of the sub-candidate term a₂, so that it may be determined that the correct word needed by the user is more likely to be the original candidate term a₁.

With reference to the first aspect, in some implementations, a sorting manner of the k₁ original candidate terms and the k₂ sub-candidate terms in the first-page candidate term set is random sorting.

In the foregoing solution, the k₁ original candidate terms and the k₂ sub-candidate terms in the first-page candidate term set are not fixed, so that the first-page candidate term set is displayed more flexibly. In a possibility, this may be set based on an actual requirement.

With reference to the first aspect, in some implementations, a sorting manner of the p₁ original candidate terms and the p₂ sub-candidate terms in the first-page candidate term set is random sorting.

In the foregoing solution, the p₁ original candidate terms and the p₂ sub-candidate terms in the first-page candidate term set are not fixed, so that the first-page candidate term set is displayed more flexibly. In a possibility, this may be set based on an actual requirement.

With reference to the first aspect, in some implementations, the first input information and the second input information are code that meets a coding rule of the input method application.

In the foregoing solution, the first input information and the second input information correspond to an input method application currently used by the user. The first input information may correspond to an input method application in a different language, for example, a Chinese input method application, a Korean input method application, or a Japanese input method application, or correspond to different coding rules of the input method application, for example, pinyin or strokes of a Chinese input method application, or correspond to different input manners, for example, voice input or handwriting input.

With reference to the first aspect, in some implementations, the original candidate terms are stored in a local database or a non-local database.

In the foregoing solution, different original candidate terms may be matched based on input information such as the first input information and the second input information of the user by using the local database or the non-local database such as a cloud database, thereby increasing flexibility of a source of a database used by the input method application.

According to a second aspect, this application provides an electronic device, including a processor and a memory. The memory is configured to store instructions. The processor is configured to execute the instructions, and when the processor executes the instructions, the method according to the first aspect is performed.

According to a third aspect, this application provides a computer-readable storage medium. The computer-readable storage medium stores instructions. When the instructions are run on an electronic device, the method according to the first aspect is performed.

According to a fourth aspect, this application provides a computer program product. The computer program product includes computer instructions. When the computer instructions are run on an electronic device, the electronic device performs the method according to the first aspect.

In conclusion, according to the input method provided in this application, more candidate terms that are more likely to be needed by the user are set in the first-page candidate term set, so that the user can have a higher probability to quickly select a correct word directly from the first-page candidate term set. This can help the user quickly and correctly modify an incorrect word and can significantly improve modification efficiency of the user especially in the case of a large modification amount.

### BRIEF DESCRIPTION OF DRAWINGS

To describe the technical solutions in embodiments of this application more clearly, the following briefly describes the accompanying drawings used in describing embodiments or the conventional technology. Apparently, the accompanying drawings in the following description show merely some embodiments of this application, and a person of ordinary skill in the art may still derive other drawings from these accompanying drawings without creative efforts.
FIG. 1a to FIG. 1d are diagrams of an input scenario according to some embodiments of this application;
FIG. 2 is a diagram of a hardware structure of an electronic device according to some embodiments of this application;
FIG. 3 is a diagram of an architecture of an input method application according to some embodiments of this application;
FIG. 4A and FIG. 4B are a schematic flowchart of interaction between units in an input method application according to some embodiments of this application;
FIG. 5 shows an input method according to some embodiments of this application; and
FIG. 6 shows a setting interface of a first-page candidate term set according to some embodiments of this application.

### DESCRIPTION OF EMBODIMENTS

Aspects of illustrative embodiments are described below using terms commonly used by a person skilled in the art.

It may be understood that the illustrative embodiments of this application include but are not limited to an input method, an electronic device, and a storage medium.

In the following description, for illustration instead of limitation, specific details such as a specific system structure and technology are provided, to make a thorough understanding of embodiments of this application. However, a person skilled in the art shall understand that this application may also be implemented in other embodiments without these specific details. In other cases, detailed descriptions of well-known systems, apparatuses, circuits, and methods are omitted, so that this application is described without being obscured by unnecessary details.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

For ease of understanding, the following explains some terms used in this specification.

A weight value is a weight value corresponding to a word stored in a database used by an input method application, and usually represents a use probability of each word stored in the database, and may be periodically updated.

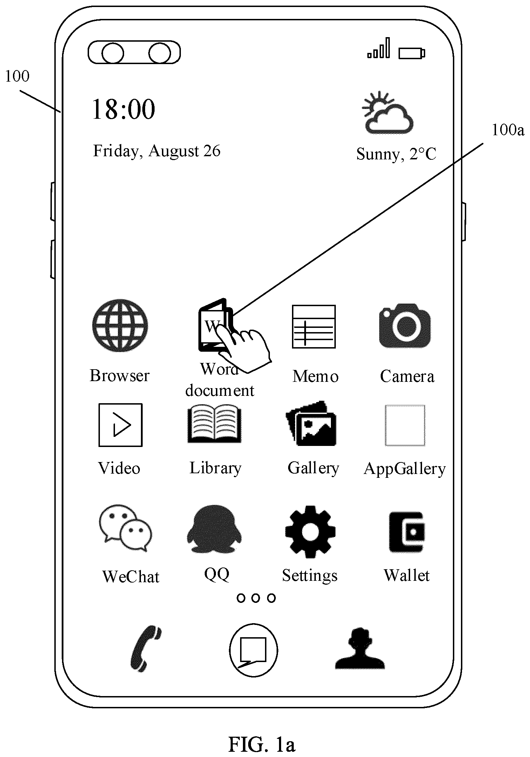

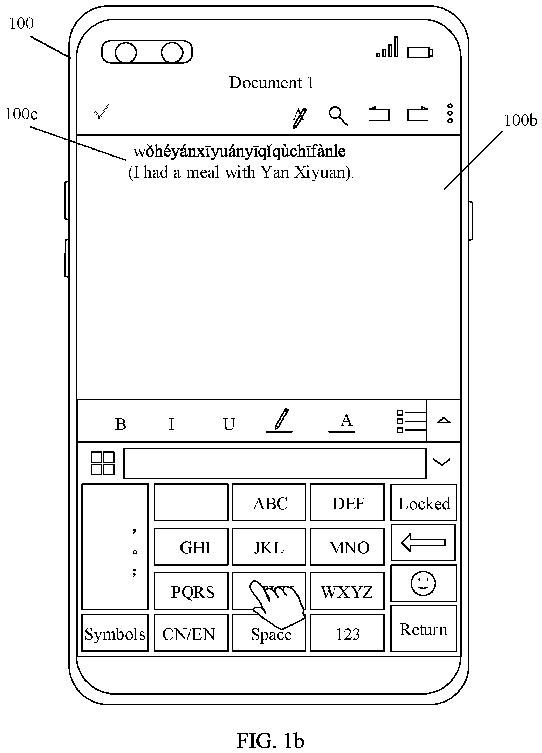

As described in the background, in a process of using an electronic device, for example, a mobile phone 100, to enter a word, a user may encounter a case in which entered words include an incorrect word that needs to be modified. For example, as shown in FIG. 1a, the user is accustomed to recording daily life on the mobile phone 100. At 18:00 p.m. on Friday, August 26, the user, as usual, opens a Word document application 100a on a screen of the mobile phone 100 to record an itinerary of the current day. An input interface 100b shown in FIG. 1b displays entered words 100c "wǒhéyánxi̅yuányi̅qǐqùchifànle" (I had a meal with Yan Xiyuan) of the user.

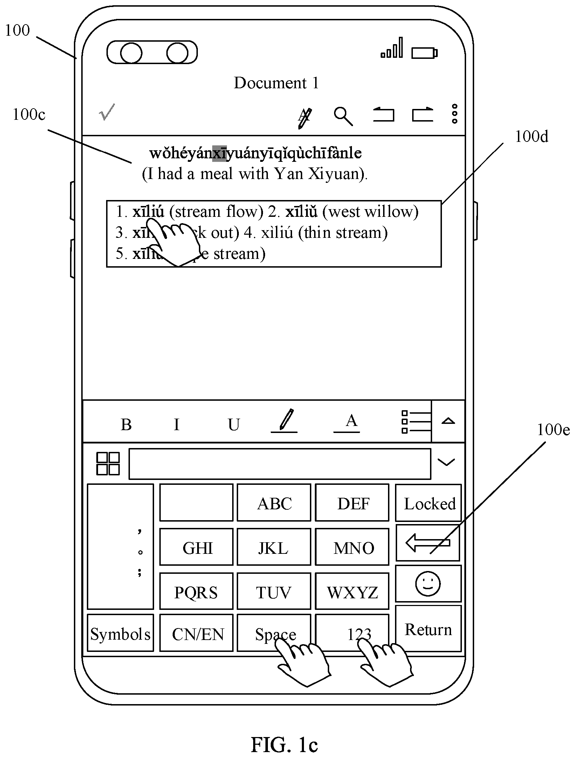

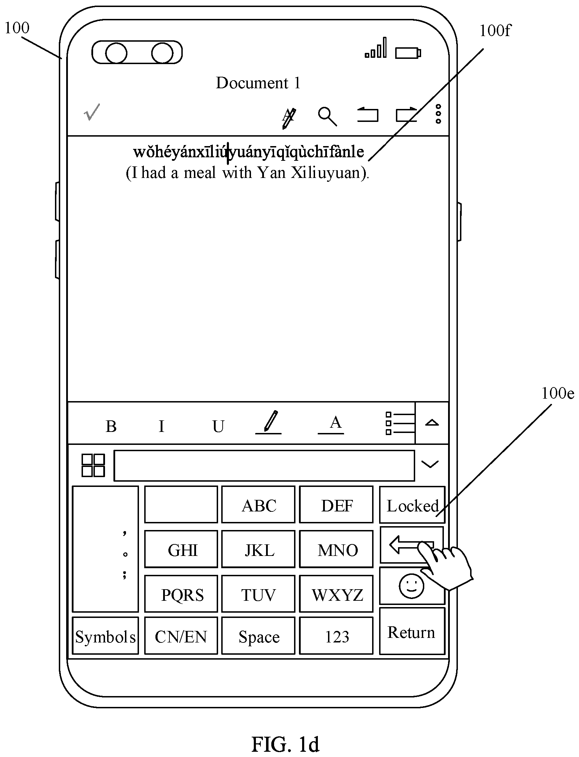

In the entered words 100c, "xi̅" (sunlight) is not a word that the user wants to enter, and a correct word that the user wants to enter is "xi̅" (stream). If the user directly enters pinyin "xi", a word that appears in a first-page candidate term set of the input method application may not include "xi̅" (stream), but another word corresponding to the pinyin "xi". Therefore, to quickly modify "xi̅" (sunlight) to "xi̅" (stream), as shown in FIG. 1c, the user may mark "xi̅" (sunlight) in the entered words 100c with a cursor, and enter pinyin "xiliu" of "xi̅liú" (stream flow). The input method application searches the database for candidate terms based on the pinyin "xiliu". The first-page candidate term set is first-page candidate information displayed by the input method application to the user. Because "xi̅liú" (stream flow) is a common term, when the input method application displays a candidate term corresponding to the pinyin "xiliu", as shown in FIG. 1c, "xi̅liú" (stream flow) may be displayed at a 1^{st} location of the first-page candidate term set 100d. In addition, the first-page candidate term set 100d includes several candidate terms with maximum weight values, for example, may include "1. xi̅liú (stream flow) 2. xi̅liǔ (west willow) 3. xi̅liu̅ (suck out) 4. xìliú (thin stream) 5. xi̅liú (hope stream)". In this way, the user may quickly find "1. xi̅liú (stream flow)" in the first-page candidate term set 100d, and tap a number on a keyboard 100e, or tap a space key on the keyboard 100e, or directly tap "1. xi̅liú (stream flow)" on the first-page candidate term set 100d, to replace the word "xi̅" (sunlight) in the entered words with words "xi̅liú" (stream flow). Then, as shown in FIG. 1d, the user may tap a delete key on the keyboard 100e to delete an irrelevant word "liú" (flow) in "xi̅liú" (stream flow), and finally obtain modified correct entered words 100f "wǒhéyánxi̅yuányi̅qǐqùchi̅fànle" (I had a meal with Yan Xiyuan).

It can be learned from the scenario in FIG. 1a to FIG. 1d that, whether the user can modify "xi̅" (sunlight) to "xi̅" (stream) depends largely on a candidate term set recommended by the input method application to the user, especially the first-page candidate term set recommended to the user. If the correct word needed by the user is included in the first-page candidate term set, or even in the front of the first-page candidate term set, the user can quickly find the correct word, and quickly select the correct word to replace the incorrect word, without turning to a next page or even next few pages of candidate term sets to search for the correct word, which is time-consuming. However, in the method of first selecting a term including the correct word and then deleting an irrelevant word, although the method of entering a common term including the correct word can help the user find the common term including the correct word quickly, the modification work includes a step of deleting an irrelevant word from the common term including the correct word. If the user needs to perform a large amount of modification work, the user needs to perform a large quantity of deletion operations, which is time-consuming, leading to poor experience.

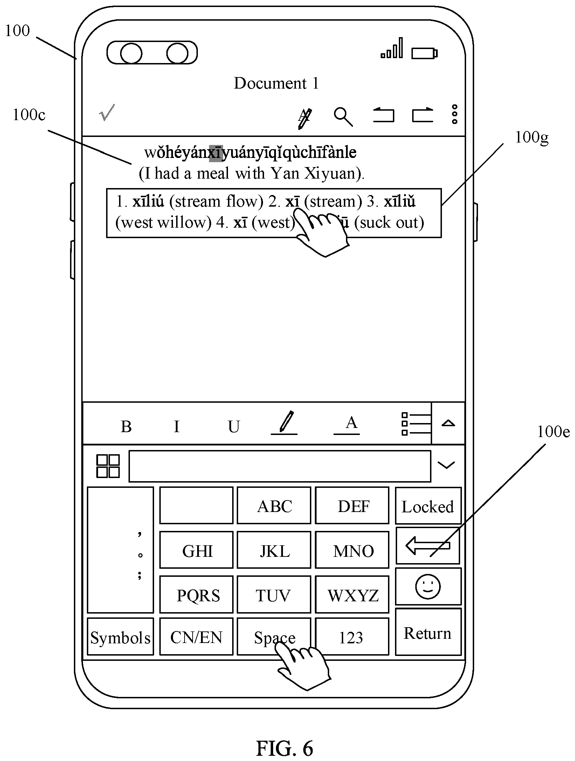

Therefore, to help the user quickly and correctly modify the entered words, this application provides an input method. In the foregoing scenario, when the user modifies some words in the entered words, in the first-page candidate term set, not only may candidate terms corresponding to input information of the user be displayed, but also some words in candidate terms that may be needed by the user are displayed. For example, corresponding to the foregoing example, when the user enters pinyin "xiliu" and wants to modify "xi̅" (sunlight) to "xi̅" (stream), words such as "xi̅" (stream) and "xi̅" (west) are further displayed in the first-page candidate term set in addition to candidate terms such as "xi̅liú" (stream flow) and "xi̅liǔ" (west willow) corresponding to the pinyin "xiliu", so that the user can quickly select a wanted correct word from the first-page candidate term set. Specifically, the input method may include the following steps.
(1) The input method application determines, based on an operation of the user such as deleting the entered words or selecting a word with a cursor, a word (referred to as a to-be-modified word below) that the user needs to modify. For example, as shown in FIG. 1c, the input method application determines, based on an operation of selecting a word "xi̅" (sunlight) by the user on the entered words 100c by using the cursor, that the word "xi̅" (sunlight) is a word (referred to as a to-be-modified word below) that the user needs to modify.
(2) The input method application finds a candidate term (referred to as an original candidate term below) in a database based on the input information of the user. The input information is code that meets a coding rule of the input method application currently used by the user. For example, as shown in FIG. 1c, the input method application finds matching candidate terms (referred to as original candidate terms below) such as "xi̅liú" (stream flow), "xi̅liǔ" (west willow), "xi̅liu̅" (suck out), "xìliú" (thin stream), and "xi̅liú" (hope stream)" from the database based on pinyin "xiliu" entered by the user.
(3) The input method application extracts, from the candidate terms (referred to as original candidate terms below), a sub-candidate term that has same code as a word that needs to be modified (referred to as a to-be-modified word below). For example, the input method application extracts, from the candidate terms (referred to as original candidate terms below) such as "xi̅liú" (stream flow), "xi̅liǔ" (west willow), "xi̅liu̅" (suck out), "xìliú" (thin stream), and "xi̅liú" (hope stream)", sub-candidate terms such as "xi̅" (stream), "xi̅" (west), "xi̅" (suck), "xi" (thin), and "xi̅" (hope) that have the same pinyin of "xi̅" (sunlight).
(4) The input method application may set, in the first-page candidate term set, a candidate term (referred to as an original candidate term below) a₁ that has a maximum weight value in the candidate terms (referred to as original candidate terms below) and a sub-candidate term a₂ of the candidate term. For example, the input method application sets, in the first-page candidate term set, both "xi̅liú" (stream flow) that has a maximum weight value in the candidate terms (referred to as original candidate terms below) and a sub-candidate term "xi̅" (stream) in "xi̅liú" (stream flow). Refer to FIG. 6.
   In addition, there are many methods for setting the first-page candidate term set. Examples are as follows.
(5) The input method application subtracts a weight value of the candidate term (referred to as an original candidate term below) a₁ from a weight value of the sub-candidate term a₂, to obtain a calculation result. The sub-candidate term a₂ corresponds to the candidate term (referred to as an original candidate term below) a₁. For example, the input method application subtracts a weight value of the "xi̅liú" (stream flow) in the database from a weight value of "xi̅" (stream) in the database, and determines, based on a calculation result, whether the user needs the candidate term such as "xi̅liú" (stream flow) (referred to as an original candidate term below), or needs the sub-candidate term such as "xi̅" (stream).
(6) The input method application sets the first-page candidate term set based on the calculation result.

For example, if the input method application determines that the user needs the candidate term (referred to as an original candidate term below) such as "xi̅liú" (stream flow) more, the input method application sets "xi̅liú" (stream flow) at a 1^{st} place in the first-page candidate term set, and sets several candidate terms (referred to as original candidate terms below) that have large weight values and/or corresponding sub-candidate terms in the first-page candidate term set, and ensures that a quantity of candidate terms such as "xi̅liú" (stream flow) (referred to as original candidate terms below) in the first-page candidate term set is greater than a quantity of sub-candidate terms such as "xi̅" (stream). In this way, more candidate terms (referred to as original candidate terms below) are provided in the first-page candidate term set, so that the user is more likely to select a correct word in the first-page candidate term set.

For another example, if the input method application determines that the user needs the sub-candidate term such as "xi̅" (stream) more, the input method application sets "xi̅" (stream) at a 1^{st} place in the first-page candidate term set, and sets several candidate terms (referred to as original candidate terms below) that have large weight values and/or corresponding sub-candidate terms in the first-page candidate term set, and ensures that a quantity of sub-candidate terms such as "xi̅" (stream) in the first-page candidate term set is greater than or equal to a quantity of sub-candidate terms such as "xi̅" (stream). In this way, more sub-candidate terms may be provided in the first-page candidate term set, so that the user is more likely to select a correct word from the first-page candidate term set.

In the foregoing input method, a candidate term that is more likely to be the correct word needed by the user is set in the first-page candidate term set, so that the user can have a great probability to quickly select the correct word directly from the first-page candidate term set without performing an additional deletion operation, which can help the user quickly and correctly modify the incorrect word in the entered words. Especially when a modification amount of the entered words of the user is large, user modification time can be significantly reduced, and user modification efficiency can be improved.

The following describes in detail an input method provided in an embodiment of this application with reference to specific technical solutions.

The technical solutions provided in embodiments disclosed in this application are applied to various electronic devices, and are not limited to the mobile phone 100. For example, the electronic device may include but is not limited to user equipment (user equipment, UE), a terminal (terminal), and the like. For example, the electronic device may be a tablet computer (portable Android device, PAD), a personal digital assistant (personal digital assistant, PDA), a handheld device with a wireless communication function, a computing device, a vehicle-mounted device, or a wearable device; or may be a mobile terminal or a fixed terminal with a touchscreen, for example a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). A form of the terminal device is not specifically limited in embodiments of this application.

The technical solutions provided in embodiments disclosed in this application are applicable to various input methods, which may include but are not limited to a simplified Chinese input method, a traditional Chinese input method, a Korean input method, a Japanese input method, and the like that are applicable to different languages, and may also include but are not limited to different types of input methods such as a pinyin input method, a shape code input method, and a phonological code input method. The input method may be a form of using a single input method, or may be a form of cross-use of several input methods. This is not specifically limited herein.

Before the input method in embodiments of this application is described in detail below, an example in which an electronic device is the mobile phone 100 is used to describe a diagram of a hardware structure of the mobile phone 100.

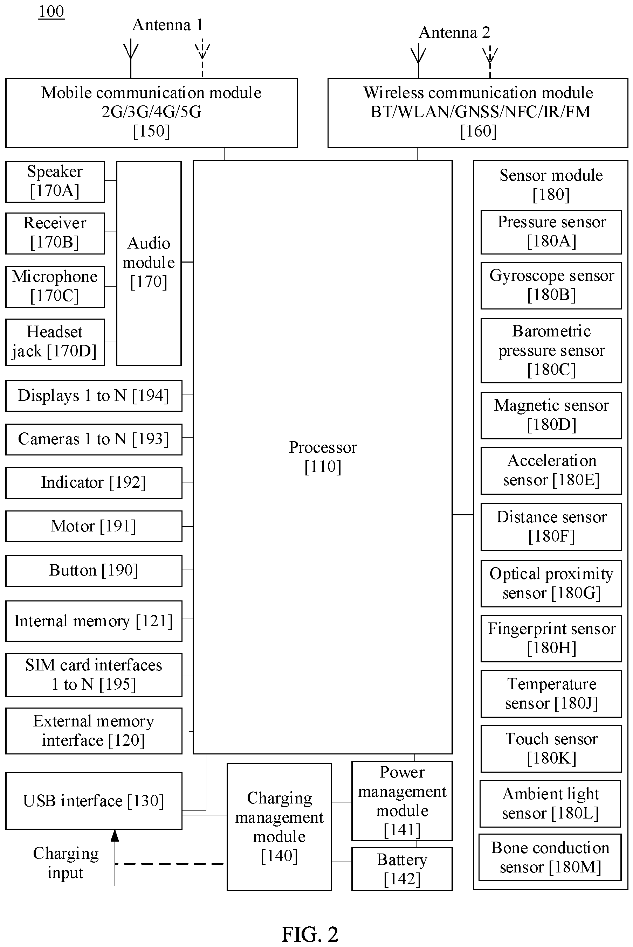

As shown in FIG. 2, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, an acceleration sensor 180E, a fingerprint sensor 180H, a touch sensor 180K, an ambient light sensor 180L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving efficiency of a system. In some embodiments, the processor 110 may invoke and execute executable instructions that are of the input method provided in embodiments of this application and that are stored in the memory, to implement the input method provided in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100, for example, configured to display a recommended term set in the input method provided in this embodiment.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, and the like.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 100, may be configured to transmit data between the mobile phone 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The charging management module 140 supplies power to the mobile phone 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 100 may be configured to cover a single or a plurality of communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the mobile phone 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the mobile phone 100 are coupled, and the antenna 2 and the wireless communication module 160 in the mobile phone 100 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The mobile phone 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1.

The mobile phone 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The digital signal processor is configured to process a digital signal, and may process another digital signal in addition to the digital image signal. For example, when the mobile phone 100 selects a frequency, the digital signal processor is configured to perform Fourier transform on energy of the frequency.

The video codec is configured to compress or decompress a digital video. The mobile phone 100 may support one or more video codecs. Therefore, the mobile phone 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU can implement applications such as intelligent cognition of the mobile phone 100, for example, image recognition, facial recognition, speech recognition, and text understanding.

The external memory interface 120 may be configured to connect to an external memory card, for example, a micro SD card, to extend a storage capability of the mobile phone 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application program required by at least one function (for example, an application program corresponding to a function related to the input method provided in this embodiment), and the like. The data storage area may store data (for example, code of an entered word) created during use of the mobile phone 100. In addition, the internal memory 121 may include a highspeed random access memory, or may include a non-volatile memory, for example, at least one magnetic disk storage device, a flash memory, or a universal flash storage (universal flash storage, UFS). The processor 110 executes various function applications of the mobile phone 100 by running the instructions stored in the internal memory 121 and/or the instructions stored in the memory disposed in the processor 110.

The mobile phone 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal.

The speaker 170A, also referred to as a "loudspeaker", is configured to convert an audio electrical signal into a sound signal. The mobile phone 100 may listen to music or answer a call in a hands-free mode over the speaker 170A.

The receiver 170B, also referred to as an "earpiece", is configured to convert an audio electrical signal into a sound signal. When the mobile phone 100 receives a call or a voice message, the receiver 170B can be placed close to a human ear for the voice to be heard.

The microphone 170C, also referred to as a "mike" or a "mic", is configured to convert a sound signal into an electrical signal. When making a call or sending a voice message, a user may make a sound by moving a human mouth close to the microphone 170C, to input a sound signal to the microphone 170C. At least one microphone 170C may be disposed in the mobile phone 100. In some other embodiments, two microphones 170C may be disposed in the mobile phone 100, to implement a noise reduction function, in addition to collecting a sound signal. In some other embodiments, three, four, or more microphones 170C may alternatively be disposed in the mobile phone 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines a pressure strength based on a change of the capacitance. When a touch operation is performed on the display 194, the mobile phone 100 detects a strength of the touch operation by using the pressure sensor 180A. The mobile phone 100 may also calculate a touch location based on a detection signal of the pressure sensor 180A. In some embodiments, touch operations that are performed in a same touch position but have different touch operation strengths may correspond to different operation instructions.

The gyroscope sensor 180B may be configured to determine a motion posture of the mobile phone 100. In some embodiments, angular velocities of the mobile phone 100 around three axes (namely, axes x, y, and z) may be determined by using the gyroscope sensor 180B. The gyroscope sensor 180B may be configured to implement image stabilization during photographing. The gyroscope sensor 180B may further be used in a navigation scenario and a somatic game scenario.

The barometric pressure sensor 180C is configured to measure barometric pressure. In some embodiments, the mobile phone 100 calculates an altitude based on a barometric pressure value measured by the barometric pressure sensor 180C, to assist in positioning and navigation.

The magnetic sensor 180D includes a Hall sensor. The mobile phone 100 may detect opening and closing of a flip leather by using the magnetic sensor 180D. In some embodiments, when the mobile phone 100 is a flip phone, the mobile phone 100 may detect opening and closing of a flip cover by using the magnetic sensor 180D. Further, a feature such as automatic unlocking of the flip cover is set based on a detected open/closed state of the leather case or a detected open/closed state of the flip cover.

The acceleration sensor 180E may detect a magnitude of acceleration of the mobile phone 100 in various directions (usually on three axes). When the mobile phone 100 is in a static state, a magnitude and a direction of gravity may be detected. The acceleration sensor 180E may further be configured to identify a posture of the mobile phone 100, and is applied to an application such as screen switching between a landscape mode and a portrait mode and a pedometer.

The distance sensor 180F is configured to measure a distance. The mobile phone 100 may measure a distance through infrared or laser. In some embodiments, in a photographing scene, the mobile phone 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The mobile phone 100 emits infrared light by using the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180G, that the user holds the mobile phone 100 close to an ear to make a call, to automatically perform screen-off for power saving. The optical proximity sensor 180G may also be used in a leather cover mode or a pocket mode to automatically perform screen unlocking or locking.

The ambient light sensor 180L is configured to sense ambient light brightness. The mobile phone 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G, to detect whether the mobile phone 100 is in a pocket, to avoid an accidental touch.

The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like. For example, the fingerprint sensor may be disposed on a front side (below the display 194) of the mobile phone 100, or the fingerprint sensor may be disposed on a back side (below a rear-facing camera) of the mobile phone 100. In addition, the fingerprint sensor may also be disposed in a touchscreen to implement a fingerprint recognition function. In other words, the fingerprint sensor may be integrated with the touchscreen to implement the fingerprint recognition function of the mobile phone 100. In this case, the fingerprint sensor may be disposed in the touchscreen, may be a part of the touchscreen, or may be disposed in the touchscreen in another manner. In addition, the fingerprint sensor may be further implemented as a full-panel fingerprint sensor. Therefore, the touchscreen may be considered as a panel on which fingerprint collection can be performed at any location. In some embodiments, the fingerprint sensor may process a collected fingerprint (for example, whether the fingerprint is verified) and send the processed fingerprint to the processor 110, and the processor 110 performs corresponding processing based on a fingerprint processing result. In some other embodiments, the fingerprint sensor may further send a collected fingerprint to the processor 110, so that the processor 110 processes the fingerprint (for example, verifies the fingerprint). In this embodiment of this application, the fingerprint sensor may use any type of sensing technology, including but not limited to an optical sensing technology, a capacitive sensing technology, a piezoelectric sensing technology, an ultrasonic sensing technology, and the like.

The temperature sensor 180J is configured to detect a temperature. In some embodiments, the mobile phone 100 executes a temperature processing policy based on the temperature detected by the temperature sensor 180J. For example, when the temperature reported by the temperature sensor 180J exceeds a threshold, the mobile phone 100 lowers performance of a processor near the temperature sensor 180J, to reduce power consumption for thermal protection. In some other embodiments, when the temperature is lower than another threshold, the mobile phone 100 heats the battery 142, to avoid an abnormal shutdown of the mobile phone 100 caused by a low temperature. In some other embodiments, when the temperature is lower than still another threshold, the mobile phone 100 boosts an output voltage of the battery 142, to avoid an abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor, to determine a type of a touch event. A visual output related to the touch operation may be provided through the display 194. In some other embodiments, the touch sensor 180K may alternatively be disposed on a surface of the mobile phone 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a pulse of a human body, to receive a blood pressure beat signal. In some embodiments, the bone conduction sensor 180M may also be disposed in a headset to be combined into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse out heart rate information based on the blood pressure beat signal obtained by the bone conduction sensor 180M, to implement a heart rate detection function.

The button 190 includes a power button, a volume button, and the like. The button 190 may be a mechanical button, or may be a touch button. The mobile phone 100 may receive a button input, and generate a button signal input related to user setting and function control of the mobile phone 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the mobile phone 100. The mobile phone 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external memory card. The mobile phone 100 interacts with a network by using the SIM card, to implement functions such as calling and data communication. In some embodiments, the mobile phone 100 uses an eSIM, that is, an embedded SIM card. The eSIM card may be embedded in the mobile phone 100, and cannot be separated from the mobile phone 100.

Although not shown in FIG. 2, the mobile phone 100 may further include a Bluetooth apparatus, a positioning apparatus, a flash, a miniature projection apparatus, a near field communication (near field communication, NFC) apparatus, and the like. Details are not described herein.

It may be understood that the structure of the mobile phone 100 shown in this embodiment of this application does not constitute a specific limitation on the mobile phone 100. In other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware.

The following embodiment may be implemented in the mobile phone 100 having the foregoing hardware structure/software structure. The following embodiment uses the mobile phone 100 as an example to describe the provided input method.

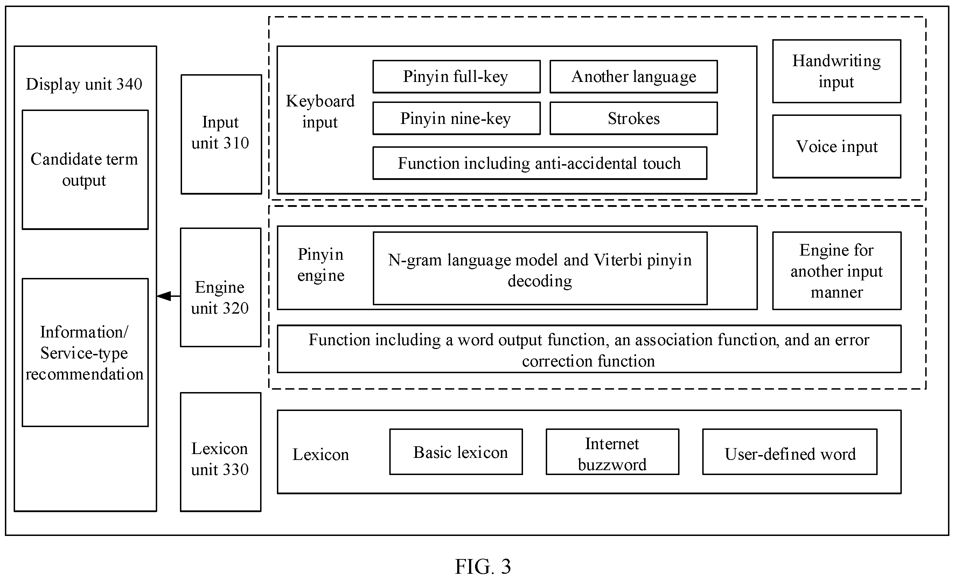

With reference to FIG. 3, the following describes a diagram of an input method architecture according to an embodiment of this application. The input method provided in the following embodiment may be implemented in the input method application architecture shown in FIG. 3.

The input method architecture shown in FIG. 3 mainly includes four core units: an input unit 310, an engine unit 320, a lexicon unit 330, and a display unit 340.

The input unit 310 may provide a keyboard input manner for a user, including a Chinese input manner, such as a pinyin input method and a stroke input method. The pinyin input method may further include a pinyin full-key input method and a pinyin nine-key input method. Core processing of the input unit 310 is anti-accidental touch, so that the user inputs, as much as possible, correct code that meets a current input method. It may be understood that the input unit 310 may further provide an input manner of another language for the user, for example, an input manner of Japanese or an input manner of Korean. The input unit 310 may further provide the user with various input manners, including handwriting input, voice input, and the like.

The engine unit 320 may be configured to perform decoding based on an input manner of the user. For example, if the input manner is a Chinese pinyin input method, the engine unit 320 may provide an N-gram language model and Viterbi (Viterbi) pinyin decoding, to implement specific word output, association, and error correction functions in combination with the lexicon unit 330. It may be understood that the engine unit 320 may also be an engine corresponding to another input manner.

The lexicon unit 330 may include basic lexicons, Internet buzzwords, user-defined words, and the like, and is used to store a candidate term. Each lexicon may be updated based on a preset frequency, and updated content may include a weight value of a candidate term stored in each lexicon, or may include a new candidate term that is not stored in each lexicon and a weight value corresponding to the new candidate term. For example, the lexicon may be preset to be updated after a specific period of time, or the lexicon may be preset to be updated after each selection of the user.

The display unit 340 may perform presentation to the user through a display interface of an electronic device, and is configured to present a candidate term and other information or service-type recommendation information.

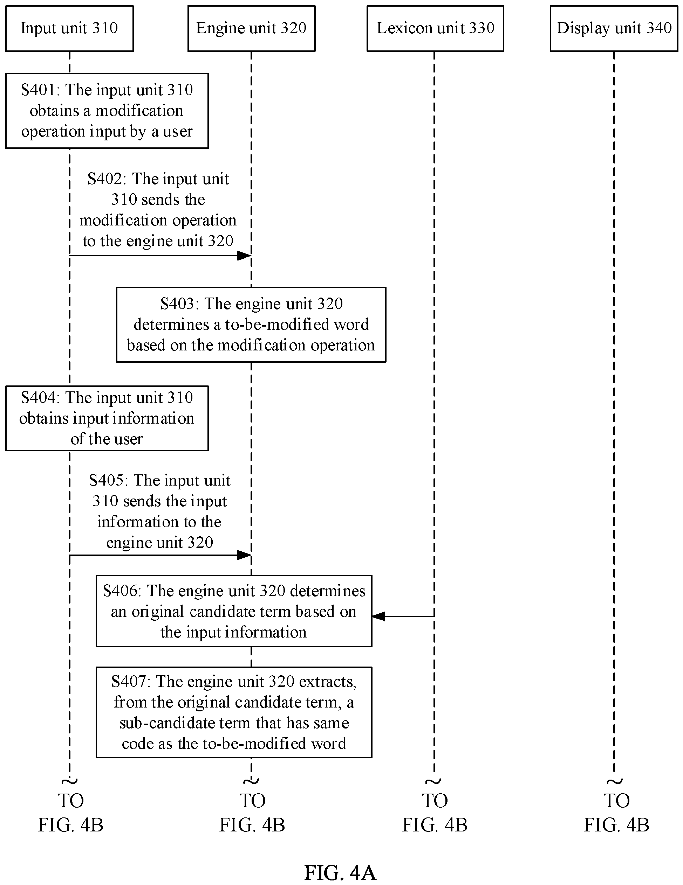

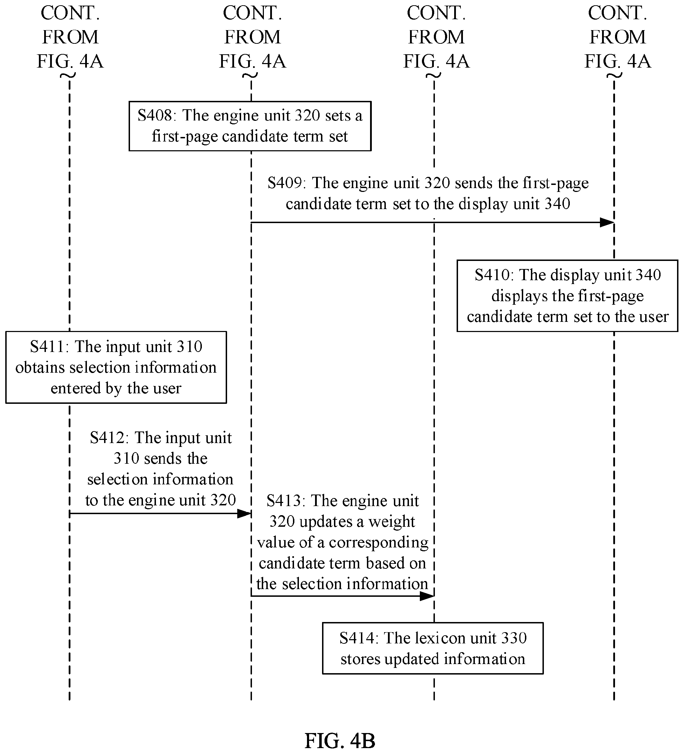

Corresponding to the input method architecture shown in FIG. 3, an embodiment of this application further provides a schematic flowchart of interaction between units in an input method architecture shown in FIG. 4A and FIG. 4B. As an example rather than a limitation, the input method may be applied to the interaction procedure. A specific interaction method may include the following steps.

S401: The input unit 310 obtains a modification operation input by the user.

The input unit 310 of the input method application may obtain a modification operation input by the user. The modification operation may include an operation of deleting a word or an operation of selecting a word with a cursor. A form of the modification operation is not specifically limited in this embodiment of this application.

S402: The input unit 310 sends the modification operation to the engine unit 320.

After receiving the modification operation input by the user, the input unit 310 needs to send the modification operation to the engine unit 320 of the input method application for processing.

S403: The engine unit 320 determines a to-be-modified word based on the modification operation.

The engine unit 320 may determine, based on the received modification operation, a word in entered words that needs to be modified by the user, that is, the to-be-modified word.

S404: The input unit 310 obtains input information of the user.

The input unit 310 may also obtain the input information of the user, where the input information is code that meets a coding rule of the input method used by the user. The user may enter code corresponding to input methods in different languages, or may enter code corresponding to different types of input methods in a same language. For example, the user may enter code corresponding to a Chinese input method, code corresponding to a Japanese input method, code corresponding to a Korean input method, and the like. The user may enter code corresponding to different types of input methods in Chinese, for example, pinyin or strokes. The user may enter code in other forms, for example, enter in a voice form or enter in a handwriting form. In this embodiment of this application, a coding type and a coding form of a language of an input method corresponding to the code are not specifically limited.

S405: The input unit 310 sends the input information to the engine unit 320.

After receiving the input information entered by the user, the input unit 310 sends the input information to the engine unit 320 for processing.

S406: The engine unit 320 determines an original candidate term based on the input information.

The engine unit 320 receives the input information entered by the user, and obtains, by searching a local database or a non-local database, an original candidate term matching the input information.

The database searched by the engine unit 320 may be a local database or a non-local database. A source, a type, and a form of the database searched by the engine unit 320 are not specifically limited in this embodiment of this application.

S407: The engine unit 320 extracts, from the original candidate term, a sub-candidate term that has same code as the to-be-modified word.

The engine unit 320 extracts, from the original candidate term based on code of the to-be-modified word, the sub-candidate term that has same code as the to-be-modified word.

S408: The engine unit 320 sets a first-page candidate term set.

The engine unit 320 sets the first-page candidate term set based on a weight value of the original candidate term. The first-page candidate term set includes an original candidate term a₁ that has a maximum weight value and a corresponding sub-candidate term a₂. In addition, the engine unit 320 further sets a specific location and an element in the first-page candidate term set.

S409: The engine unit 320 sends the first-page candidate term set to the display unit 340.

The engine unit 320 sends the first-page candidate term set to the display unit 340 for selection by the user.

S410: The display unit 340 displays the first-page candidate term set to the user.

The display unit 340 displays the first-page candidate term set to the user through a screen of the electronic device such as the mobile phone 100.

S411: The input unit 310 obtains selection information entered by the user.

The input unit 310 selects information about a candidate term on the screen based on the selection information of the user on the screen of the mobile phone 100.

S412: The input unit 310 sends the selection information to the engine unit 320.

As a processor of the input method application, the engine unit 320 is used to receive and process information sent by the input unit 310.

S413: The engine unit 320 updates a weight value of a corresponding candidate term based on the selection information.

The engine unit 320 updates, in the lexicon unit 330 based on the selection information of the user, the weight value of the candidate term corresponding to the selection information of the user. A specific update method may vary based on different input method applications.

S414: The lexicon unit 330 stores updated information.

The lexicon unit 330 stores the weight value of the candidate term updated by the engine unit 320, for recommendation when using the input method application by the user. Information stored in the lexicon unit 330 may be periodically updated by presetting different periods, or the information may be preset to be updated after each selection of the user. Specific update time and an update manner are not specifically limited in this embodiment of this application.

In the following embodiment, based on the input method architecture shown in FIG. 3, sorting of candidate terms is improved, and an input method is provided. The following specifically describes the method.

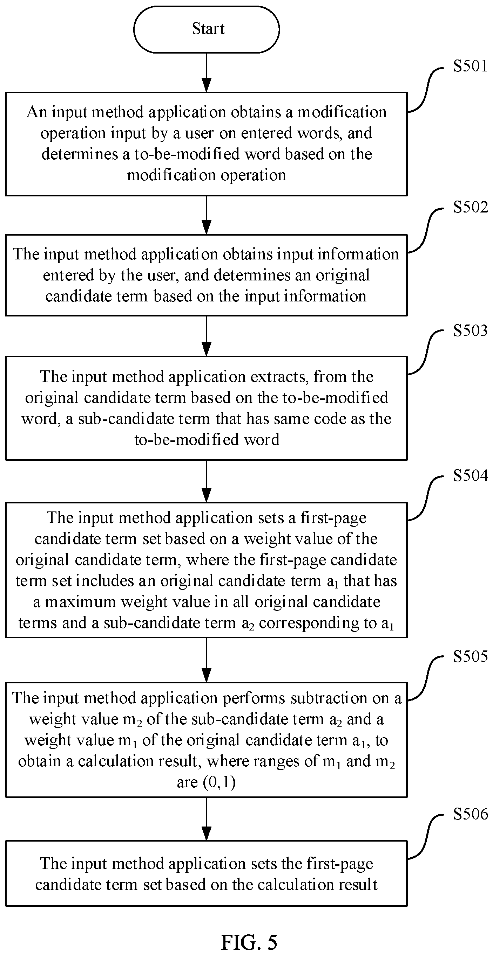

In a case in which an error occurs in entered words of the user and the user needs to modify an incorrect word, for example, as shown in FIG. 1b, entered words 100c of the user are "wǒhéyánxi̅yuányi̅qǐqùchi̅fànle" (I had a meal with Yan Xiyuan), a word "xi̅" (sunlight) is incorrect, and a correct word is "xi̅" (stream). The user needs to modify the incorrect word "xi̅" (sunlight) to the correct word "xi̅" (stream). Corresponding to such a case, an embodiment of this application provides an input method shown in FIG. 5. As an example rather than a limitation, the input method may specifically include the following steps.

S501: An input method application obtains a modification operation input by the user on entered words, and determines a to-be-modified word based on the modification operation.

Because there is an incorrect word "xi̅" (sunlight) in the entered words 100c, the user may mark the to-be-modified word on the entered words 100c by performing the modification operation. In some embodiments, the modification operation may include an operation of deleting the to-be-modified word, an operation of selecting the to-be-modified word with a cursor, and the like. For example, the user may delete the word "xi̅" (sunlight) with the cursor, or select the word "xi̅" (sunlight) with the cursor as shown in FIG. 1c. A form of the modification operation is not specifically limited in this embodiment of this application.

S502: The input method application obtains input information of the user, and determines an original candidate term set based on the input information of the user.

In this embodiment, the input information of the user may be pinyin that meets a coding rule of a Chinese pinyin input method. In an example of this embodiment, the input information may be a common term including the correct word "xi̅" (stream) or may be pinyin of a common sentence. For example, the input information may be pinyin "xiliu" of "xi̅liú" (stream flow), or pinyin "bulinshenxi" of "búlínshe̅nxi̅" (not near a deep stream), or the like. The user may also enter pinyin of another word based on a requirement of the user.

It may be understood that, in some embodiments, the user may also enter code that meets a coding rule of another Chinese input method, for example, strokes, or the like. The user may also enter code of an input manner of another language, for example, code of a Japanese input manner, code of a Korean input manner, or the like. The user may also enter input information in a voice manner or a handwriting manner. In this embodiment of this application, a used input manner, a language applied to the input manner, code corresponding to the input manner, and the like are not specifically limited.

The input method application receives the input information entered by the user, and obtains, by searching a local database or a non-local database, an original candidate term matching the input information. For example, the input method application searches the local database or the non-local database based on the input information "xiliu" entered by the user, to obtain the original candidate term, where the original candidate term includes "xi̅liú" (stream flow), "xi̅liǔ" (west willow), "xi̅liu̅" (suck out), "xìliú" (thin stream), and the like. A source, a type, and the like of the used database are not specifically limited in this embodiment of this application.

S503: The input method application extracts, from the original candidate term based on the to-be-modified word, a sub-candidate term that has same code as the to-be-modified word.

For example, if the input method application may search for and extract, based on pinyin "xi" of the to-be-modified word "xi̅" (sunlight) in the pinyin input method, sub-candidate terms that have same pinyin as the to-be-modified word "xi̅" (sunlight) from original candidate terms such as "xi̅liú" (stream flow), "xi̅liǔ" (west willow), "xi̅liu̅" (suck out), and "xìliú" (thin stream), the sub-candidate terms may include a word "xi̅" (stream), a word "xi̅" (west), a word "xi̅" (suck), a word "xi" (thin), and the like.

S504: The input method application sets a first-page candidate term set based on a weight value of the original candidate term, where the first-page candidate term set includes an original candidate term a₁ that has a maximum weight value in all original candidate terms and a sub-candidate term a₂ corresponding to a₁.

It may be understood that content stored in the database used in this embodiment includes, for example, a candidate term and a weight value of the candidate term, and may be updated based on accumulated selection information of the user in a preset period. For example, the content stored in the database may be periodically updated on a 1^{st} day of each month, or the content stored in the database may be updated each time selection information of the user for each candidate term is obtained.

Because the weight value of the candidate term in the database is updated data based on the selection information of the user, the original candidate term that has a maximum weight value in all original candidate terms or the sub-candidate term corresponding to the original candidate term is most likely to be the correct word needed by the user. The original candidate term that has a maximum weight value in all original candidate terms and the corresponding sub-candidate term are set in the first-page candidate term set, so that the user is more likely to be able to directly select a needed correct word from the two to replace the to-be-modified word. The first-page candidate term set is 1^{st} page candidate terms recommended by the input method application to the user.

Therefore, if the first-page candidate term set includes the original candidate term that has a maximum weight value and the corresponding sub-candidate term, regardless of whether the correct word needed by the user is the original candidate term that has a maximum weight value in all original candidate terms or the corresponding sub-candidate term, the user may directly find the correct word in the first-page candidate term set, and select the correct word by entering a sequence number before the correct word, or select the correct word by directly tapping the correct word in the first-page candidate term set. In addition, if the correct word needed by the user is the sub-candidate term corresponding to the original candidate term that has a maximum weight value in all original candidate terms, the user does not need to first select the original candidate term including the correct word and then delete an irrelevant word from the original candidate term including the correct word. Instead, the user can directly select the correct sub-candidate term, thereby reducing steps of an existing method for modifying the incorrect word, and greatly improving a working speed and working efficiency of modifying the incorrect word.

For example, because the words "xi̅liú" (stream flow) are the original candidate term that has a maximum weight value in all original candidate terms corresponding to pinyin "xiliu" entered by the user, the correct word needed by the user is probably the words "xi̅liú" (stream flow) or the word "xi̅" (stream). The input method application sets "xi̅liú" (stream flow) that has a maximum weight value in all original candidate terms and "xi̅" (stream) in the first-page candidate term set for recommendation to the user. In this way, no matter whether the correct word needed by the user is "xi̅liú" (stream flow) or "xi̅" (stream), the user may select the correct word by tapping the words "xi̅liú" (stream flow) or tapping the word "xi̅" (stream), or by tapping sequence numbers before the two. However, if the input method application recommends a candidate term only based on pinyin "xiliu" entered by the user, only the words "xi̅liú" (stream flow) appear in the first-page candidate term set. The user needs to first select the original candidate term "xi̅liú" (stream flow), and then delete a word "liú" (flow) from "xi̅liú" (stream flow), to complete modification of the incorrect word "xi̅" (sunlight).

S505: The input method application performs subtraction on a weight value m₂ of the sub-candidate term a₂ and a weight value m₁ of the original candidate term a₁, to obtain a calculation result, where ranges of m₁ and m₂ are (0,1).

In this embodiment of this application, both m₁ and m₂ are decimals between 0 and 1.

S506: The input method application sets the first-page candidate term set based on the calculation result.

### In a first case:

If m₁ is less than m₂, and a calculation result obtained by subtracting m₁ from m₂ is greater than a preset threshold, the input method application determines that a probability that the correct word needed by the user is the original candidate term is greater than a probability that the correct word needed by the user is the sub-candidate term. Otherwise, the user may directly enter code of the sub-candidate term, and does not need to enter code of the original candidate term to modify the incorrect word. The preset threshold in this embodiment of this application may be set to 0.2, or may be set to another real number greater than or equal to 0 and less than or equal to 1 based on an actual use scenario. This is not specifically limited herein.

In this case, the input method application sets the original candidate term a₁ at a 1^{st} location in the first-page candidate term set, and sets the corresponding sub-candidate term a₂ at another location in the first-page candidate term set other than the 1^{st} location. The input method application sorts all original candidate terms except a₁ in descending order of weight values, and extracts k original candidate terms that are ranked in front, where k is a natural number greater than 1. The input method application selects several original candidate terms and/or sub-candidate terms from the k original candidate terms and k sub-candidate terms respectively corresponding to the k original candidate terms, and sets the several original candidate terms and/or sub-candidate terms at remaining locations in the first-page candidate term set. A quantity of the original candidate terms is greater than a quantity of the sub-candidate terms in the first-page candidate term set.

Table 1 shows several examples of the first-page candidate term set that is set by the input method application in the first case.

**Table 1**

| | |
|---|---|
| Example 1 | 1. xi̅liú (stream flow) 2. xi̅ (stream) 3. xi̅iliǔ (west willow) 4. xi̅liu (suck out) 5. xìliú (thin stream) 6. xi̅ (west) 7. xi̅ (suck) |
| Example 2 | 1. xi̅liú (stream flow) 2. xi̅ (west) 3. xi̅ (suck) 4. xìliú (thin stream) 5. xi̅ (stream) 6. xi̅iliǔ (west willow) 7. xi̅liu (suck out) |
| Example 3 | 1. xi̅liú (stream flow) 2. xi̅ (stream) 3. xi̅ (west) 4. xi̅liǔ (west willow) 5. xi̅ (suck) 6. xi̅liu̅ (suck out) 7. xiliú (thin stream) |

As shown in Table 1, the input method application sets the words "xi̅liú" (stream flow) that have a maximum weight value in the original candidate terms at the 1^{st} location in the first-page candidate term set, and sets the word "xi̅" (stream) at a location other than the 1^{st} location in the first-page candidate term set. The input method application selects "xi̅liǔ" (west willow), "xi̅liu" (suck out), "xìliú" (thin stream), and "xi̅liú" (hope stream) whose weight values rank in a 2^{nd} place, a 3^{rd} place, a 4^{th} place, and a 5^{th} place in the original candidate terms, and corresponding sub-candidate terms "xi̅" (west), "xi̅" (suck), "xi" (thin), and "xi̅" (hope). Then, the input method application selects several candidate terms from these original candidate terms and corresponding sub-candidate terms, and sets the candidate terms at other locations in the first-page candidate term set. A length of the first-page candidate term set can accommodate a maximum of five original candidate terms, namely, "xi̅liú" (stream flow), "xi̅liǔ" (west willow), "xi̅liu" (suck out), and "xìliú" (thin stream). In this example of this application, locations of original candidate terms and sub-candidate terms that are set in the first-page candidate term set and that are in the original candidate terms such as "xi̅liǔ" (west willow), "xi̅liu" (suck out), "xìliú" (thin stream), and "xi̅liú" (hope stream), and corresponding sub-candidate terms "xi̅" (west), "xi̅" (suck), "xi" (thin), and "xi̅" (hope) are not specifically limited. However, a quantity of the original candidate terms that are set in the first-page candidate term set needs to be greater than a quantity of the sub-candidate terms, to provide more original candidate terms for the user, and help the user obtain the correct word in the first-page candidate term set with a higher probability.

It can be learned from Table 1 that, in the first case, the input method application determines that a probability that the correct word needed by the user is the original candidate term is greater than a probability that the correct word needed by the user is the sub-candidate term. In this case, the input method application sets "xi̅liú" (stream flow) that has a maximum weight value in the original candidate terms at the 1^{st} location in the first-page candidate term set, and the user can select the words "xi̅liú" (stream flow) by directly selecting a number "1", or tapping a space key, or tapping "xi̅liú" (stream flow) on the screen, or in another manner. In addition, the input method application does not limit a location of the corresponding sub-candidate term "xi̅" (stream) in the first-page candidate term set. The input method application sets all or some of other original candidate terms that have large weight values and corresponding sub-candidate terms in the first-page candidate term set, and limits a quantity of the original candidate terms in the first-page candidate term set to be greater than a quantity of the sub-candidate terms, so that more original candidate terms that are more likely to be correct words needed by the user can be provided to the user in the first-page candidate term set, thereby improving a probability that the user directly obtains the correct word in the first-page candidate term set, and further improving a working speed and working efficiency of modifying an original word by the user.

It may be understood that a quantity of the original candidate terms and the sub-candidate terms displayed in the first-page candidate term set is adjusted based on different scenarios. For example, different from a total quantity of the original candidate terms and the sub-candidate terms included in the first-page candidate term set shown in Table 1 being 7, a total quantity of the original candidate terms and the sub-candidate terms included in the first-page candidate term set 100g may be set to 5, as shown in FIG. 6.

It may be understood that Table 1 is merely an example for description of a setting result of the first-page candidate term set. FIG. 6 is also another example for description and is not intended to limit this application.

### In another case other than the first case:

If m₁ is less than m₂, and a calculation result obtained by subtracting m₂ from m₁ is less than or equal to a preset threshold, or if m₁ is greater than or equal to m₂, the input method application determines that a probability that the correct word needed by the user is the sub-candidate term is greater than a probability that the correct word needed by the user is the original candidate term. Therefore, in a case in which the user considers that it is difficult to match the correct word by directly entering code of the sub-candidate term, the user chooses to enter code of the original candidate term for matching search. The preset threshold in this embodiment of this application may be 0.2, or may be another real number greater than or equal to 0 and less than or equal to 1 based on an actual use scenario. This is not specifically limited herein.

In this case, the input method application sets the sub-candidate term a₂ at a 1^{st} location in the first-page candidate term set, and sets the original candidate term a₁ at another location in the first-page candidate term set other than the 1^{st} location. The input method application sorts all original candidate terms except a₁ in descending order of weight values, and extracts p original candidate terms that are ranked in front, where p is a natural number greater than 1. The input method application selects several original candidate terms and/or sub-candidate terms from the p original candidate terms and p sub-candidate terms respectively corresponding to the p original candidate terms, and sets the several original candidate terms and/or sub-candidate terms at remaining locations in the first-page candidate term set. A quantity of the sub-candidate terms is greater than or equal to a quantity of the original candidate terms in the first-page candidate term set.

Table 2 shows several examples of the first-page candidate term set that is set by the input method application in the another case other than the first case.

**Table 2**

| | |
|---|---|
| Example 1 | 1. xi̅ (stream) 2. xi̅liú (stream flow) 3. xi̅liǔ (west willow) 4. xi̅liu (suck out) 5. xi (thin) 6. xi̅ (west) 7. xi̅ (suck) |
| Example 2 | 1. xi̅ (stream) 2. xi̅ (west) 3. xi̅ (suck) 4. xi (thin) 5. xi̅liú (stream flow) 6. xi̅liǔ (west willow) 7. xi̅liu̅ (suck out) |
| Example 3 | 1. xi̅ (stream) 2. xi̅liú (stream flow) 3. xi̅ (west) 4. xi̅liǔ (west willow) 5. xi̅ (suck) 6. xi̅liu̅ (suck out) 7. xi (thin) |

As shown in Table 2, the input method application sets a sub-candidate term "xi̅" (stream) corresponding to the words "xi̅liú" (stream flow) that have a maximum weight value in the original candidate terms at the 1^{st} location in the first-page candidate term set, and sets the words "xi̅liú" (stream flow) at a location other than the 1^{st} location in the first-page candidate term set. The input method application selects "xi̅liǔ" (west willow), "xi̅liu̅" (suck out), "xìliú" (thin stream), and "xi̅liú" (hope stream) whose weight values rank in a 2^{nd} place, a 3^{rd} place, a 4^{th} place, and a 5^{th} place in the original candidate terms, and corresponding sub-candidate terms "xi̅" (west), "xi̅" (suck), "xi" (thin), and "xi̅" (hope). Then, the input method application selects several candidate terms from these original candidate terms and corresponding sub-candidate terms, and sets the candidate terms at other locations in the first-page candidate term set. A length of the first-page candidate term set can accommodate a maximum of five original candidate terms, namely, "xi̅liú" (stream flow), "xi̅liǔ" (west willow), "xi̅liu" (suck out), and "xìliú" (thin stream). In this example of this application, locations of original candidate terms and sub-candidate terms that are set in the first-page candidate term set and that are in the original candidate terms such as "xi̅liǔ" (west willow), "xi̅liu" (suck out), "xìliú" (thin stream), and "xi̅liú" (hope stream) and corresponding sub-candidate terms "xi̅" (west), "xi̅" (suck), "xi" (thin), and "xi̅" (hope) are not specifically limited. However, a quantity of the sub-candidate terms that are set in the first-page candidate term set needs to be greater than or equal to a quantity of the original candidate terms, to provide more sub-candidate terms for the user, and help the user obtain the correct word in the first-page candidate term set with a higher probability.

It can be learned from Table 2 that, in the another case other than the first case, the input method application determines that a probability that the correct word needed by the user is the sub-candidate term is greater than a probability that the correct word needed by the user is the original candidate term. In this case, the input method application sets the sub-candidate term i̅"x" (stream) corresponding to "xi̅liú" (stream flow) that has a maximum weight value in the original candidate terms at the 1st location in the first-page candidate term set, and the user can select the word "xi̅" (stream) by directly selecting a number "1", or tapping a space key, or tapping "xi̅" (stream) on the screen, or in another manner. In addition, the input method application does not limit a location of "xi̅liú" (stream flow) that has a maximum weight value in the original candidate terms in the first-page candidate term set. The input method application sets all or some of other original candidate terms that have large weight values and corresponding sub-candidate terms in the first-page candidate term set, and limits a quantity of the sub-candidate terms in the first-page candidate term set to be greater than or equal to a quantity of the original candidate terms, so that more sub-candidate terms that are more likely to be correct words needed by the user can be provided to the user in the first-page candidate term set, thereby improving a probability that the user directly obtains the correct word in the first-page candidate term set, and further improving a working speed and working efficiency of modifying an original word by the user.

It may be understood that Table 2 is merely an example for description of a setting result of the first-page candidate term set, and is not intended to limit this application.

In the conventional technology, the input method application usually divides an original candidate term set into several pages and presents the pages to the user. In this case, the first-page candidate term set is first displayed on the screen for selection by the user. Because code of the sub-candidate term and code of the to-be-modified word are the same in the input method, it indicates that the correct word needed by the user is more likely to be the sub-candidate term. In addition, because input information of the user corresponds to the original candidate term, it indicates that the correct word needed by the user is also more likely to be the original candidate term.

In the foregoing input method, the original candidate term that has a maximum weight value in the original candidate terms and the sub-candidate term that corresponds to the original candidate term and that has same code as the to-be-modified word are both set in the first-page candidate term set. In addition, weight values of the original candidate term and the sub-candidate term corresponding to the original candidate term are compared, so that remaining original candidate terms or sub-candidate terms are selected and set in the first-page candidate term set, and a sorting order in the first-page candidate term set is arranged. In this way, a probability that the first-page candidate term set includes the correct word needed by the user is increased, so that the user has a great probability to directly search for and select the correct word in the first-page candidate term set, and a step in which the user needs to delete an irrelevant word from the original candidate term including the correct word is deleted, thereby further improving work efficiency of modifying the incorrect word in the entered words by the user and user satisfaction.

In the foregoing embodiments, descriptions of each embodiment have respective focuses. For a part that is not described in detail or recorded in an embodiment, refer to related descriptions in other embodiments.

It is apparent to a person skilled in the art that some of the specific details presented above with respect to the electronic device 100 may not be required to practice a particular implementation or its equivalent. Similarly, another electronic device may include more subsystems, modules, components, and the like. In an appropriate case, some sub-modules may be implemented as software or hardware. Therefore, it should be understood that the foregoing descriptions are not intended to be exhaustive or to limit the present disclosure to the precise form described herein. On the contrary, it is apparent to those of ordinary skill in the art that many modifications and variations are possible according to the above teachings.

Embodiments disclosed in this application may be implemented in hardware, software, firmware, or a combination of these implementation methods. Embodiments of this application may be implemented as a computer program or program code executed on a programmable system. The programmable system includes at least one processor and a storage system (including a volatile and non-volatile memory and/or a storage element), at least one input device, and at least one output device.

The program code may be applied to input instructions, to perform functions described in this application and generate output information. The output information may be used in one or more output devices in a known manner. For a purpose of this application, a processing system includes any system with a processor such as a digital signal processor (DSP), a microcontroller, an application-specific integrated circuit (ASIC), or a microprocessor.

The program code may be implemented in a high-level programming language or an object-oriented programming language, to communicate with the processing system. The program code may be alternatively implemented in an assembly language or a machine language when needed. Actually, the mechanism described in this application is not limited to a scope of any particular programming language. In any case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine (for example, a computer) readable form, including but not limited to a floppy disk, a compact disc, an optical disc, a compact disc read-only memory (CD-ROM), a magneto-optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory configured to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine-readable (for example, computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that, in the examples and specification of this patent, relational terms such as first and second are merely used to distinguish one entity or operation from another entity or operation, and do not necessarily require or imply any such actual relationship or order between these entities or operations. Moreover, the terms "include", "comprise", or any other variants thereof are intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element defined by "include a/an" does not exclude another same element existing in the process, the method, the article, or the device that includes the element.

Although this application has been illustrated and described with reference to some preferred embodiments of this application, a person of ordinary skill in the art should understand that various changes may be made to this application in form and detail without departing from the scope of this application. The foregoing embodiments are merely intended to describe the technical solutions of this application, but not to limit this application. Although this application is described in detail with reference to the foregoing embodiments, a person of ordinary skill in the art should understand that they may still make modifications to the technical solutions described in the foregoing embodiments or make equivalent replacements to some technical features thereof. These modifications or replacements do not depart from the spirit and scope of the technical solutions of embodiments of this application, and shall fall within the protection scope of this application.

## Claims

1. An input method, applied to an electronic device in which an input method application is installed, comprising:
detecting a pre-modification operation performed by a user on M target words, wherein the pre-modification operation comprises entering first input information, the first input information corresponds to at least N words, N is greater than M, and both N and M are positive integers; and
displaying a first-page candidate term set in an interface of the input method application in response to the pre-modification operation, wherein the first-page candidate term set comprises at least one original candidate term corresponding to the first input information and at least one sub-candidate term corresponding to some of the first input information, wherein
the original candidate term comprises at least N words, and the sub-candidate term comprises M words.

2. The method according to claim 1, wherein the M target words are M selected words, or the M target words are M words deleted before the pre-modification operation.

3. The method according to claim 1, wherein the displaying a first-page candidate term set in an interface of the input method application in response to the pre-modification operation comprises:
corresponding to a first case, displaying an original candidate term a₁ at a 1^{st} location in the first-page candidate term set, wherein the first case comprises: a weight value of the original candidate term a₁ that has a maximum weight value and that appears after the first input information is entered is less than a weight value of a sub-candidate term a₂ that is of the original candidate term a₁ and that appears after second input information corresponding to the M target words is entered.

4. The method according to claim 3, further comprising:
displaying the sub-candidate term a₂, k₁ original candidate terms other than a₁, and/or k₂ sub-candidate terms at remaining locations in the first-page candidate term set, wherein weight values of the k₁ original candidate terms that appear corresponding to entering of the first input information are greater than a weight value of an appearing original candidate term other than a₁, the k₂ sub-candidate terms correspond to at least some of the k₁ original candidate terms, k₁ is greater than or equal to k₂, k₁ and k₂ are natural numbers, and ranges of k₁ and k₂ are (0, k].

5. The method according to claim 3, wherein the first case further comprises: a difference between the weight value of the sub-candidate term a₂ and the weight value of the original candidate term a₁ is greater than a preset threshold.

6. The method according to claim 1, wherein the displaying a first-page candidate term set in an interface of the input method application in response to the pre-modification operation comprises:
corresponding to a second case, displaying a sub-candidate term a₂ at a 1^{st} location in the first-page candidate term set, wherein the sub-candidate term a₂ corresponds to an original candidate term a₁ that has a maximum weight value and that appears after the first input information is entered.

7. The method according to claim 6, further comprising:
displaying the original candidate term a₁, p₁ original candidate terms other than a₁, and/or p₂ sub-candidate terms at remaining locations in the first-page candidate term set, wherein weight values of the p₁ original candidate terms that appear corresponding to entering of the first input information are greater than a weight value of an appearing original candidate term other than a₁, the p₂ sub-candidate terms correspond to at least some of the p₁ original candidate terms, p₂ is greater than or equal to p₁, p₁ and p₂ are natural numbers, and ranges of p₁ and p₂ are (0, k].

8. The method according to claim 6, wherein the second case comprises:
a weight value of the original candidate term a₁ that has the maximum weight value and that appears after the first input information is entered is less than a weight value of the sub-candidate term a₂ that is of the original candidate term a₁ and that appears after second input information corresponding to the M target words is entered, and a difference between the weight value of the sub-candidate term a₂ and the weight value of the original candidate term a₁ is less than or equal to a preset threshold; and
the weight value of the original candidate term a₁ that has the maximum weight value and that appears after the first input information is entered is greater than or equal to the weight value of the sub-candidate term a₂ that is of the original candidate term a₁ and that appears after the second input information corresponding to the M target words is entered.

9. The method according to claim 4, wherein a sorting manner of the k₁ original candidate terms and the k₂ sub-candidate terms in the first-page candidate term set is random sorting.

10. The method according to claim 7, wherein a sorting manner of the p₁ original candidate terms and the p₂ sub-candidate terms in the first-page candidate term set is random sorting.

11. The method according to claim 1, wherein the first input information is code that meets a coding rule of the input method application.

12. The method according to claim 1, wherein the original candidate terms are stored in a local database or a non-local database.

13. An electronic device, comprising a processor and a memory, wherein
the memory stores computer-executable instructions; and
the processor executes the computer-executable instructions stored in the memory, to enable the processor to perform the method according to any one of claims 1 to 12.

14. A computer-readable storage medium, wherein the readable medium stores instructions, and when the instructions are executed on an electronic device, the electronic device is enabled to perform the method according to any one of claims 1 to 12.
